# EUROPÄISCHE PATENTANMELDUNG

(11) **EP 0 765 050 A2**
(43) Veröffentlichungstag der Anmeldung: **26.03.1997**
(21) Anmeldenummer: 96114290.8
(22) Anmeldetag: 05.09.1996
(51) Int. Cl.: H04J 3/16, H04J 3/06

(54) **Verfahren zur Steuerung der Übertragung von digitalen Nachrichtensignalen über ein Zeitmultiplex-Übertragungsmedium**

(30) Priorität: 21.09.1995 DE 19535123
(71) Anmelder: SIEMENS AKTIENGESELLSCHAFT, 80333 München (DE)
(72) Erfinder: Wagner, Edwin, 82140 Olching (DE); Nässl, Robert, 82288 Kottgeisering (DE)

(57) **Zusammenfassung**

Die Übertragung von digitalen Nachrichtensignalen eines ersten und/oder zweiten Typs beispielsweise in Form von Datensignalen und/oder digital codierten Sprachsignalen erfolgt in Zeitkanälen eines für einen Zeitmultiplex-Betrieb ausgelegten Übertragungsmediums, wobei den Zeitkanälen periodisch wiederholt in aufeinanderfolgenden Pulsrahmen auftretende Zeitschlitze zugeordnet sind. Dabei ist der jeweilige Zeitkanal in eine festgelegte Mehrzahl von Subzeitkanälen unterteilt. Gemäß einer ersten Ausgestaltung ist vorgesehen, daß einer der Subzeitkanäle des jeweiligen Zeitkanals als Steuerkanal festgelegt wird, in welchem zumindest ein Teil der zur Verfügung stehenden Übetragungskapazität für die Übertragung von Steuerdaten reserviert ist. In diesen Steuerdaten sind den übrigen Subzeitkanälen des jeweiligen Zeitkanals individuell zugeordnete Angaben enthalten, durch welche der für den jeweiligen Subzeitkanal vorgesehene Typ von digitalen Nachrichtensignalen spezifiziert ist. Gemäß einer zweiten Ausgestaltung ist dagegen vorgesehen, daß einer der Zeitkanäle als gemeinsamer Steuerkanal benutzt wird, um den für die Subzeitkanäle der einzelnen Zeitkanäle vorgesehenen Typ von digitalen Nachrichtensignalen zu spezifizieren. Damit ist für die beiden Typen von Nachrichtensignalen eine flexible Bandbreiten-Aufteilung möglich.

## Beschreibung

Die Erfindung betrifft ein Verfahren zur Steuerung der Übertragung von digitalen Nachrichtensignalen eines ersten und/oder zweiten Typs in Zeitkanälen eines für einen Zeitmultiplex-Betrieb ausgelegten Übertragungsmediums gemäß Oberbegriff des Patentanspruches 1 bzw. 5.

Zuweilen ist es vorgesehen, daß auf für einen Zeitmultiplexbetrieb ausgelegten Übertragungsmedien in den einzelnen Zeitkanälen Nachrichtensignale unterschiedlichen Typs zu übertragen sind. Hierfür sind Maßnahmen zu ergreifen, um die über ein solches Übertragungsmedium miteinander verbundenen Einrichtung hinsichtlich der Zeitkanalbelegung zu synchronisieren.

Es ist nun Aufgabe der vorliegenden Erfindung, einen Weg zu zeigen, wie ein Verfahren gemäß Oberbegriff des Patentanspruches 1 bzw. 5 ausgebildet werden kann, um die Übertragung von digitalen Nachrichtensignalen eines ersten und/oder zweiten Typs in Zeitkanälen eines für einen Zeitmultiplex-Betrieb ausgelegten Übertragungsmediums mit einem geringen Steuerungsaufwand realisieren zu können.

Gelöst wird diese Aufgabe durch die im Patentanspruch 1 bzw. 5 angegebenen Verfahrensmerkmale. Die Erfindung bringt dabei den Vorteil mit sich, daß in Subzeitkanälen von auf dem Übertragungsmedium festgelegten Zeitkanälen wahlfrei digitale Nachrichtensignale eines ersten oder zweiten Typs übertragen werden können und dabei in einem dem jeweiligen Zeitkanal zugehörigen, als Steuerkanal festgelegten Subzeitkanal bzw. in einem sämtlichen Zeitkanälen gemeinsam zugeordneten Steuerkanal Steuerdaten übertragen werden, durch welche der Typ der in den Subzeitkanälen der einzenen Zeitkanäle zu übertragenden Nachrichtensignale spezifiziert ist. Damit ist es mit einem geringen Steuerungsaufwand möglich, die über das Übertragungsmedium miteinander verbundenen Einrichtungen bezüglich der Nutzung der Subkanäle zu synchronisieren, wobei die Nutzung der einzelnen Subzeitkanäle flexibel änderbar ist, ohne daß über das Übertragungsmedium verlaufende Verbindungen zuvor ausgelöst oder unterbrochen werden müssen.

Vorteilhafte Ausgestaltungen der vorliegenden Erfindung ergeben sich aus den Patentansprüchen 2 bis 4 und 6 bis 8.

Im folgenden wird die vorliegende Erfindung anhand von Ausführungsbeispielen und anhand von auf diese sich beziehenden Zeichnungen näher erläutert.
- FIG 1: zeigt in einem Blockschaltbild ein Kommunikationssystem, bei welchem die Erfindung angewandt ist,
- FIG 2: zeigt Impulsdiagramme zur Erläuterung eines ersten Ausführungsbeispiels der vorliegenden Erfindung,
- FIG 3: zeigt Impulsdiagramme zur Erläuterung eines zweiten Ausführungsbeispiels der vorliegenden Erfindung,
- FIG 4: zeigt einen möglichen Aufbau für den Sendeteil der in FIG 1 lediglich schematisch dargestellten Leitungsanschlußeinrichtungen und
- FIG 5: zeigt einen möglichen Aufbau für den Empfangsteil der in FIG 1 lediglich schematisch dargestellten Leitungsanschlußeinrichtungen.

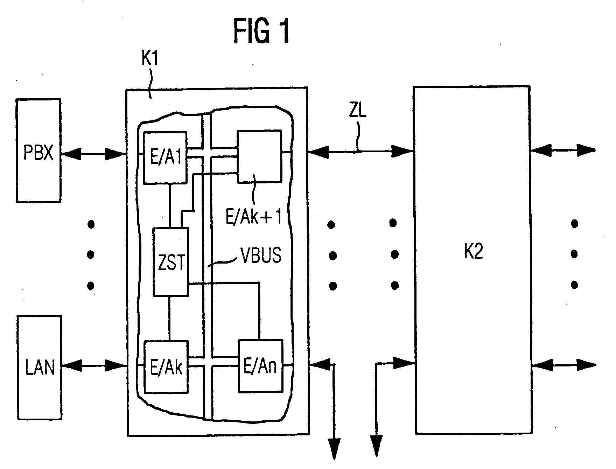

In FIG 1 ist ausschnittweise ein Kommunikationssystem dargestellt, welches über Multiplex-Übertragungsmedien beispielsweise in Form von Multiplex-Leitungen miteinander verbundene Koppeleinrichtungen aufweist. In diesem Kommunikationssystem werden über die einzelnen Multiplex-Leitungen im Zeitmultiplex Verbindungen für digitale Nachrichtensignale unterschiedlichen Typs geführt. Als Beispiel für derartige Verbindungen seien hier Verbindungen für Datensignale und Verbindungen für digital codierte Sprechsignale genannt.

Zum Verständnis der vorliegenden Erfindung sind in FIG 1 lediglich zwei mit K1 und K2 bezeichnete Koppeleinrichtungen dargestellt, welche über zumindest eine Multiplex-Leitung ZL miteinander verbunden sind und durch welche im Zuge der genannten Verbindungen über Multiplex-Leitungen zugeführte digitale Nachrichtensignale aufgenommen und entsprechend dem für die jeweilige Verbindung vorgesehenen Weg über weiterführende Multiplex-Leitungen weitergeleitet werden. Die Koppeleinrichtungen weisen hierfür, wie am Beispiel der Koppeleinrichtung K1 angedeutet, jeweils eine Mehrzahl von mit E/A1,..., E/Ak, E/Ak+1,..., E/An bezeichnete Leitungsanschlußeinrichtungen für den Anschluß der Multiplex-leitungen auf. Dabei sei als Beispiel mit der der Koppeleinrichtung K1 zugehörigen Leitungsanschlußeinrichtung E/Ak+1 die bereits erwähnte Multiplex-Leitung ZL, mit der Leitungsanschlußeinrichtung E/A1 eine Einrichtung beispielsweise in Form einer Fernsprech-Nebenstellenanlage PBX für die Aufnahme und Abgabe von digital codierten Sprachsignalen und mit der Leitungsanschlußeinrichtung E/Ak ein lokales Netzwerk LAN für die Aufnahme und Abgabe von Datensignalen verbunden.

Die Leitungsanschlußeinrichtungen sind innerhalb der jeweiligen Koppeleinrichtung über einen Vermittlungsbus VBUS miteinander verbunden, über welchen über die Leitungsanschlußeinrichtungen im Zeitmultiplex aufgenommene digitale Nachrichtensignale an für die einzelnen Verbindungen in Frage kommende Leitungsanschlußeinrichtungen weitergeleitet werden, wobei zumindest auf weiterführenden Multiplex-Leitungen jeweils digitale Nachrichtensignale der genannten unterschiedlichen Typen im Zeitmultiplex auftreten können. Die Aufnahme und Weiterleitung der digitalen Nachrichtensignal durch die Leitungsanschlußeinrichtungen wird dabei von einer mit diesen verbundenen zentralen Steuereinrichtung ZST her gesteuert. Auf das mit Hilfe des Vermittlungsbusses VBUS realisierte Vermittlungsprinzip innerhalb der jeweiligen Koppeleinrichtung wird hier nicht näher eingegangen, da dies nicht Gegenstand der vorliegenden Erfindung ist. Es sei hier jedoch darauf hingewiesen, daß ein mögliches Vermittlungsprinzip in der nicht vorveröffentlichten deutschen Patentanmeldung 19504683.5 beschrieben ist.

Nachdem zuvor die Funktionsweise des in FIG 1 dargestellten Kommunikationssystems kurz umrissen wurde, wird im folgenden auf die Steuerung der Übertragung von zuvor erwähnten digitalen Nachrichtensignalen unterschiedlichen Typs im Zeitmultiplex über die jeweilige Multiplex-Leitung am Beispiel der Multiplex-Leitung ZL näher eingegangen. Entsprechendes gilt auch für die übrigen Multiplex-Leitungen des Kommunikationssystems.

Im folgenden wird davon ausgegangen, daß auf der Multiplex-Leitung ZL für die Übertragung von digitalen Nachrichtensignalen Zeitkanäle festgelegt sind, denen in periodisch wiederholt auftretenden Pulsrahmen jeweils ein Zeitschlitz zugeordnet ist. Dabei sind die Zeitkanäle jeweils in eine Mehrzahl von Subzeitkanälen mit jeweils einer festgelegten Bitbreite unterteilt, in welchen wahlweise digitale Nachrichtensignale eines ersten Typs beispielsweise in Form von Datensignalen oder eines zweiten Typs beispielsweise in Form von digital codierten Sprachsignalen übertragbar sind. In entsprechender Weise ist der dem jeweiligen Zeitkanal innerhalb eines Pulsrahmens zugeordnete Zeitschlitz in eine Mehrzahl von Sub-Zeitschlitzen mit jeweils einer festgelegten Bitbreite unterteilt.

Für eine Kommunikation zwischen den mit einer Multiplex-Leitung verbundenen Koppeleinrichtungen, hier zwischen den Koppeleinrichtungen K1 und K2, bezüglich der Belegung der den einzelnen Zeitkanälen zugeordneten Subzeitkanäle werden nachfolgend zwei Ausführungsbeispiele näher erläutert. Bei einem ersten Ausführungsbeispiel ist dabei vorgesehen, daß in jedem der Zeitkanäle gesondert eine noch näher zu erläuternde Steuerinformation bezüglich der Belegung der zugehörigen Subzeitkanäle geführt ist. Bei dem zweiten Ausführungsbeispiel wird dagegen eine sämtlichen Zeitkanälen gemeinsam zugeordnete Steuerinformation übertragen, aus welcher für jeden der Zeitkanäle individuell die Belegung der zugehörigen Unterkanäle hervorgeht.

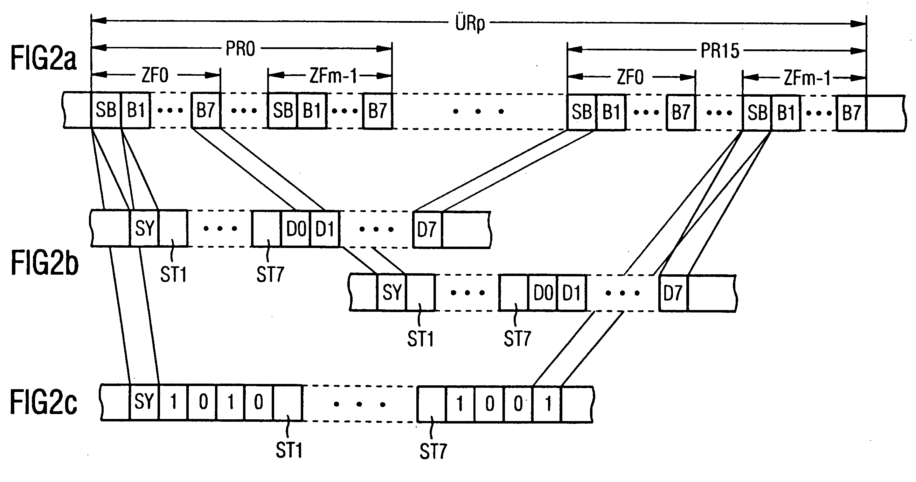

Ein für die Erläuterung des ersten Ausführungsbeispieles dienendes Impulsdiagramm ist in FIG 2 dargestellt. Als Beispiel wird dabei angenommen, daß auf der Multiplex-Leitung ZL eine Pulsrahmen-Struktur festgelegt ist, wie sie unter a) angegeben ist. Danach sind auf der Multiplex-Leitung m Zeitkanäle mit jeweils beispielsweise einer Übertragungskapazität von 64 kBit/s vorgesehen, welche im folgenden mit ZK0 bis ZKm-1 bezeichnet sind. Diesen Zeitkanälen ist in aufeinanderfolgenden Pulsrahmen jeweils ein Zeitschlitz zugeordnet. Die pro Pulsrahmen vorhandenen Zeitschlitze sind dabei entsprechend der Zuordnung zu den Zeitkanälen mit ZF0 bis ZFm-1 bezeichnet.

Jeder der Zeitkanäle ZK0 bis ZKm-1 ist beispielsweise in acht 8-kBit/s-Subzeitkanäle mit jeweils einer Bitbreite von einem Bit unterteilt. Diese Subzeitkanäle werden im folgenden mit SK,UK1,...,UK7 bezeichnet. Diesen Subzeitkanälen ist jeweils pro Pulsrahmen ein Sub-Zeitschlitz mit einer Bitbreite von einem Bit zugeordnet. Die den Subkanälen des jeweiligen Zeitkanals zugeordneten Sub-Zeitschlitze sind in FIG 2 unter a) mit SB, B1,..., B7 bezeichnet. Von diesen Subzeitkanälen eines Zeitkanals wird beispielsweise der erste mit SK bezeichnete Subzeitkanal als Steuerkanal benutzt, welchem in aufeinanderfolgenden Pulsrahmen jeweils der Sub-Zeitschlitz SB des jeweiligen Zeitkanals (ZK0,...,ZKm-1) zugeordnet ist. Dabei wird bei dem Ausführungsbeispiel davon ausgegangen, daß 16 aufeinanderfolgende, unter a) mit PR0 bis PR15 bezeichnete Pulsrahmen einen Überrahmen bildet. Ein solcher Überrahmen ist hier mit ÜRp bezeichnet.

Unter b) der FIG 2 ist unter Bezugnahme auf den Überrahmen ÜRp ein Beispiel für eine in dem Steuerkanal SK des jeweiligen Zeitkanals (ZK0 bis ZKm-1) übertragene Steuer-Bitfolge am Beispiel der Zeitkanäle ZK0 und ZKm-1 angegeben. Entsprechendes gilt auch für die Steuerkanäle SK der übrigen Zeitkanäle. Danach wird zunächst in dem dem Zeitkanal ZK0 bzw. ZKm-1 zugehörigen Zeitschlitz SB des Pulsrahmens PR0 ein den Beginn des Überrahmens ÜRp und damit den Beginn der Steuer-Bitfolge anzeigendes Synchronisierbit SY übertragen, welches einen von Überrahmen zu Überrahmen alternierenden logischen Pegel führt. Daran schließen sich sieben, in den Pulsrahmen PR1 bis PR7 übertragene und mit ST1 bis ST7 bezeichnete Bits an, welche den Subzeitkanälen UK1 bis UK7 des Zeitkanals ZK0 bzw. ZKm-1 individuell zugeordnet sind und durch deren logischen Pegel jeweils angegeben ist, welcher Typ von digitalen Nachrichtensignalen im nachfolgenden Überrahmen, d.h. im Überrahmen ÜRp+1, jeweils in den Subzeitkanälen UK1 bis UK7 des Zeitkanals ZR0 bzw. ZKm-1 übertragen wird. Schließlich sind in dem Steuerkanal SK des Zeitkanals ZK0 bzw. ZKm-1 noch acht weitere, in den Pulsrahmen PR8 bis PR15 übertragene und mit D0 bis D7 bezeichnete Bits vorgesehen, welche bei dem vorliegenden Ausführungsbeispiel für die Übertragung von Datensignalen reserviert sind. Damit ist die Übertragung der Steuer-Bitfolge in dem Steuerkanal zunächst abgeschlossen. Die Übertragung einer dieser entsprechenden Steuer-Bitfolge für den jeweilige Zeitkanal wiederholt sich in jedem weiteren Überrahmen, jedoch gegebenenfalls mit modifizierten Bits ST1 bis ST7, falls in der Belegung der Subzeitkanäle des jeweiligen Zeitkanals eine Änderung auftritt.

Bei dem vorliegenden Ausführungsbeispiel wird also die Hälfte der in dem Steuerkanal SK des jeweiligen 64-kBit/s-Zeitkanals zur Verfügung stehenden Übertragungskapazität, bei dem angenommenen Beispiel 4 kBit/s, für die Übertragung von Steuerinformationen benutzt, während die verbleibende Hälfte (4kBit/s) für die Übertragung von Datensignalen reserviert ist. Die dem jeweiligen Zeitkanal zugehörigen Subzeitkanäle UK1 bis UK7, welche jeweils, wie bereits erwähnt, über eine Übertragungskapazität von 8 kBit/s verfügen, können dagegen wahlfrei für die Übertragung von Datensignalen oder digital codierten Sprachsignalen in komprimierter Form belegt werden, wobei die beiden mit der jeweiligen Multiplex-Leitung verbundenen Koppeleinrichtungen, bei dem angenommenen Beispiel die Koppeleinrichtungen K1 und K2, durch die in dem Steuerkanal übetragenen Steuerinformationen entsprechend synchronisiert werden. In dem jeweiligen Zeitkanal stehen also wahlfrei 60 kBit/s für eine reine Datenübertragung bzw. für eine gemischte Übertragung von Datensignalen und digital codierten Sprachsignalen oder 56 kBit/s für ein reine Übertragung von digital codierten Sprachsignalen bei einer zusätzlichen Übertragungskapazität von 4 kBit/S für Datensignale zur Verfügung. Diese zusätzliche Übertragungskapazität ist dabei für die Übertragung von Signalisierungsdaten für die einzelnen Sprachverbindungen nutzbar.

Das vorstehend erläuterte Steuerungsprinzip ist insbesondere dann vorteilhaft anwendbar, wenn sich die Belegung der Subzeitkanäle des jeweiligen Zeitkanals häufig ändert, wie es beispielsweise bei Kommunikationsystemen für Wählverbindungen der Fall ist. Treten dagegen Belegungsänderungen in den Zeitkanälen wie in Kommunikationssystemen für Festverbindungen relativ selten auf, so kann alternativ auch derart vorgegangen werden, daß in dem zuvor erwähnten Steuerkanal SK des jeweiligen Zeitkanals nicht ständig ein Teil der Übertragungskapazität für die Übertragung einer Steuer-Bitfolge reserviert wird, sondern dessen volle Übertragungskapazität von 8 kBit/s bei einer unveränderten Subkanalbelegung für eine Datenübetragung benutzt wird. Lediglich bei einer erforderlichen Belegungsänderung der Subzeitkanäle wird in dem Steuerkanal SK des jeweiligen Zeitkanals eine Steuer-Bitfolge übertragen, durch welche eine Änderung der momentanen Belegung angezeigt wird. Eine derartige Steuer-Bitfolge kann beispielsweise, wie in FIG 2 unter c) angedeutet, durch ein Synchronisierbit SY und ein erstes Bitmuster mit einer festgelegten Anzahl von Bits eingeleitet werden. Anschließend erfolgt die Übertragung von sieben Bits, durch welche die neue Belegung der zu dem Zeitkanal gehörenden Subzeitkanäle angezeigt ist. Diese Bits entsprechen also den Bits ST1 bis ST7 unter b) in FIG 2. Abgeschlossen wird die Steuer-Bitfolge dann durch ein zweites Bitmuster mit einer festgelegten Anzahl von Bits. Das erste und das zweite Bitmuster sowie deren jeweilige Länge sind dabei derart festzulegen, daß die Steuer-Bitfolge in der Gegenstelle von Datensignalen unterscheidbar ist, die normalerweise in dem Steuerkanal übertragen werden.

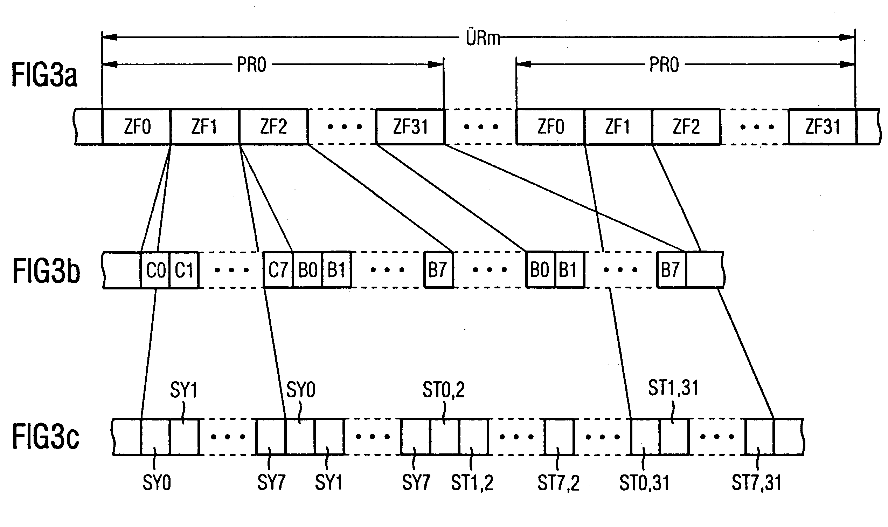

Im folgenden wird auf ein weiteres Ausführungsbeispiel eingegangen. Ein für dessen Erläuterung dienendes Impulsdiagramm ist in FIG 3 dargestellt. Hierbei wird als Beispiel davon ausgegangen, daß auf der jeweiligen Multiplex-Leitung eine Rahmenstruktur vorgesehen ist, wie sie unter a) der FIG 3 angegeben ist. Danach sind auf der Multiplex-Leitung 32 Zeitkanäle mit jeweils beispielsweise einer Übertragungskapazität von 64 kBit/s vorgesehen, welche im folgenden mit ZK0 bis ZK31 bezeichnet sind. Diesen Zeitkanälen ist in aufeinanderfolgenden Pulsrahmen jeweils ein Zeitschlitz zugeordnet. Die pro Pulsrahmen vorhandenen Zeitschlitze sind dabei entsprechend der Zuordnung zu den Zeitkanälen mit ZF0 bis ZF31 bezeichnet.

Jeder der Zeitkanäle ZK0 bis ZKm31 ist in acht 8-kBit/s-Subzeitkanäle mit jeweils einer Bitbreite von einem Bit unterteilt. Diesen Subzeitkanälen ist jeweils, wie auch bei dem ersten Ausführungsbeispiel, pro Pulsrahmen ein Sub-Zeitschlitz mit einer Bitbreite von einem Bit zugeordnet. Die den Subzeitkanälen des jeweiligen Zeitkanals zugeordneten Sub-Zeitschlitze sind in FIG 3 unter b) für den Zeitkanal ZK1 mit C0, C1,..., C7 und für die Zeitkanäle ZK2 bis ZK31 mit B0, B1,..., B7 bezeichnet.

Von den Zeitkanälen ZK0 bis ZK31 wird beispielsweise der Zeitkanal ZK1 als Steuerkanal, die Zeitkanäle ZK2 bis ZK31 dagegen für die Übertragung von digitalen Nachrichtensignalen benutzt, wobei die Subzeitkanäle dieser Zeitkanäle wieder wahlfrei für Datensignale oder digital codierte Sprachsignale reserviert werden können. Dabei wird bei dem Ausführungsbeispiel davon ausgegangen, daß 32 aufeinanderfolgende, unter a) der FIG 3 mit PR0 bis PR31 bezeichnete Pulsrahmen einen Überrahmen bildet. Ein solcher Überrahmen ist hier mit ÜRm bezeichnet.

Unter c) der FIG 3 ist unter Bezugnahme auf den Überrahmen ÜRm ein Beispiel für eine in dem Zeitkanal ZK1 übertragene Steuer-Bitfolge angegeben. Danach wird zunächst in den Sub-Zeitschlitzen C0 bis C7 des diesem Zeitkanal zugeordneten Zeitfaches ZF1 der Pulsrahmen PR0 und PR1 eine den Beginn des Überrahmens ÜRm und damit den Beginn der Steuer-Bitfolge anzeigende Synchronisier-Bitfolge SY0,...,SY7 übertragen, deren einzelne Bits jeweils den gleichen, von Überrahmen zu Überrahmen alternierenden logischen Pegel aufweisen. In den Sub-Zeitschlitzen C0 bis C7 der Pulsrahmen PR1 bis PR31 werden dann nacheinander jeweils aus acht Bit bestehende Bitgruppe übertragen, deren zugehörige acht Bit den Subzeitkanälen eines der Zeitkanälen ZK2 bis ZK31 individuell zugeordnet sind. Die Bits der Bitgruppen sind entsprechend der Zuordnung zu den Zeitkanälen ZK2,...,ZK31 mit ST0,2;...;ST7,2 bis ST0,31;...;ST7,31 bezeichnet. Durch den logischen Pegel der einzelnen Bits einer solchen Bitgruppe ist dabei angegeben, welcher Typ von digitalen Nachrichtensignalen im nachfolgenden Überrahmen, d.h. im Überrahmen ÜRm+1, in dem jeweiligen Subzeitkanal übertragen wird. Damit ist die Übertragung der Steuer-Bitfolge in dem als Steuerkanal dienenden Zeitkanal ZK1 abgeschlossen. Die Übertragung einer dieser entsprechenden Steuer-Bitfolge wiederholt sich in jedem weiteren Überrahmen, jedoch gegebenenfalls mit modifizierten Bitgruppen, falls in der Belegung der Subzeitkanäle des jeweiligen Zeitkanals eine Änderung auftritt.

Auch das gerade erläuterte Steuerungsprinzip ist vorteilhaft anwendbar, wenn sich die Belegung der Subzeitkanäle des jeweiligen Zeitkanals häufig ändert. Treten dagegen Belegungsänderungen in den Zeitkanälen relativ selten auf, so kann alternativ auch derart vorgegangen werden, daß der zuvor erwähnte Zeitkanal ZK1 nicht exklusiv als Steuerkanal für die Übertragung einer Steuer-Bitfolge reserviert, sondern dieser im Normalfall für eine Datenübertragung benutzt wird. Lediglich bei einer erforderlichen Belegungsänderung in den Zeitkanälen ZK2 bis ZK31 wird in dem Zeitkanal ZK1 eine zuvor beschriebene Steuer-Bitfolge übertragen, durch welche eine Änderung der momentanen Belegung angezeigt wird. Eine derartige Steuer-Bitfolge kann wie bei dem ersten Ausführungsbeispiel durch ein erstes Bitmuster mit einer festgelegten Anzahl von Bits eingeleitet werden. Anschließend erfolgt die Übertragung der Bitgruppen ST0,2;...;ST7,2 bis ST0,31;...;ST7,31, um die geänderte Belegung der Zeitkanäle ZK2 bis ZK31 anzuzeigen. Abgeschlossen wird die Steuer-Bitfolge dann durch ein zweites Bitmuster mit einer festgelegten Anzahl von Bits. Das erste und das zweite Bitmuster sowie deren jeweilige Länge sind auch hier derart festzulegen, daß die Steuer-Bitfolge in der Gegenstelle von Datensignalen unterscheidbar ist, die normalerweise in dem Zeitkanal ZK1 übertragen werden.

Bezüglich der zuvor erläuterten Ausführungsbeispiele sei noch darauf hingewiesen, daß bei bidirektionalen Multiplex-Leitungen die Belegung der Subzeitkanäle von Zeitkanälen für beide Übertragungsrichtungen gesondert in der angegebenen Weise festgelegt wird.

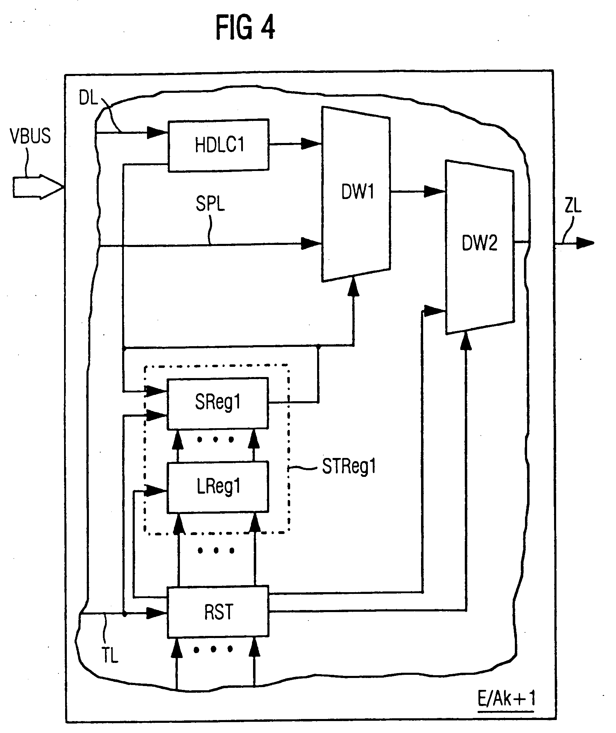

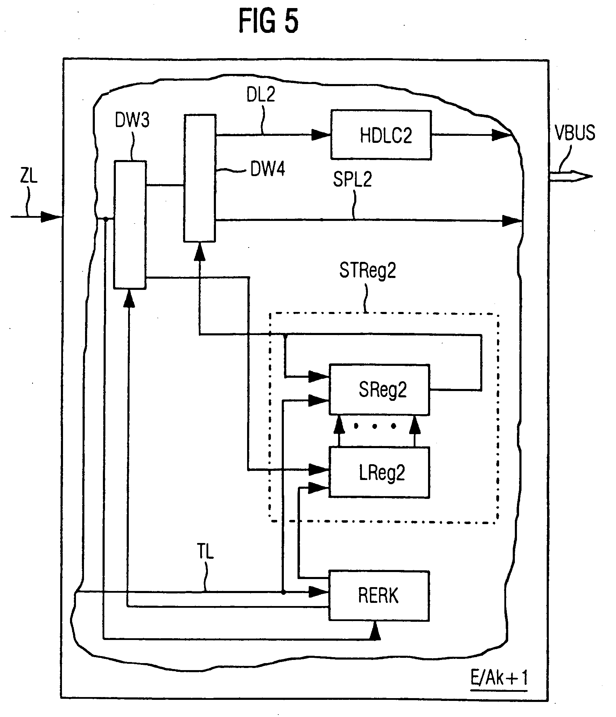

Anhand der Figuren 4 und 5 wird nachfolgend ein möglicher Aufbau der Leitungsanschlußeinrichtungen der in FIG 1 dargestellten Koppeleinrichtungen (K1, K2) für die Realisierung der zuvor beschriebenen Steuerprinzipien erläutert. Als Beispiel ist hier die mit der Multiplex-Leitung ZL verbundene Leitungsanschlußeinrichtung E/Ak+1 der Koppeleinrichtung K1, stellvertretend auch für die übrigen Leitungsanschlußeinrichtungen der einzelnen Koppeleinrichtungen, ausgewählt. Dabei sind von dieser Leitungsanschlußeinrichtung lediglich diejenigen Schaltungselemente dargestellt, welche für das Verständnis der vorliegenden Erfindung erforderlich sind, wobei als Beispiel davon ausgegangen wird, daß die über eine Multiplex-Leitung miteinander verbundenen Leitungsanschlußeinrichtungen jeweils für einen bidirektionalen Betrieb ausgebildet sind.

In FIG 4 ist der Sendeteil der Leitungsanschlußeinrichtung E/Ak+1 dargestellt. Dieser erhält die über die Multiplex-Leitung ZL zu übertragenden Datensignale und digital codierten Sprachsignale von dem zugehörigen Vermittlungsbus VBUS (FIG 1) zugeführt. Dabei werden diese Signale durch eine nicht dargestellte Einrichtung nach Typ getrennt und über eine mit DL1 bezeichnete Datenleitung bzw eine mit SPL1 bezeichnete Leitung für Sprachsignale bitweise an gesonderte Eingänge einer Datenweiche 1 weitergeleitet. In die Datenleitung ist dabei ein HDLC-Baustein eingefügt, um die Datensignale über die Multiplex-Leitung ZL nach einer HDLC-Prozedur gesichert zu übertragen. Ausgangsseitig steht diese Datenweiche DW1 mit einem ersten Eingang einer weiteren Datenweiche DW2 in Verbindung, welche ausgangsseitig an die Multiplex-Leitung ZL angeschlossen ist.

Der Sendeteil der Leitungsanschlußeinrichtung E/Ak+1 weist außerdem als zentrale Steuereinrichtungen eine Rahmen-Steuereinrichtung RST sowie eine Steuerregister-Anordnung STReg1 auf. Durch diese zentralen Steuereinrichtungen wird die Übertragung der Datensignale und digital codierten Sprachsignale sowie der Steuersignale über die Multiplex-Leitung ZL entsprechend einem der vorstehend erläuterten Ausführungsbeispiele gesteuert. Hierfür stellt die Rahmen-Steuereinrichtung RST eine entsprechend dem ersten bzw. zweiten Ausführungsbeispiel festgelegte Steuer-Bitfolge bereit, aus welcher, wie zuvor erwähnt, die Belegung der Subzeitkanäle der auf der Multiplex-Leitung definierten Zeitkanäle für bzw. ab dem nächsten Überrahmen hervorgeht. Informationen über diese Belegung werden dabei beispielsweise von der in FIG 1 dargestellten zentralen Steuereinrichtung ZST her geliefert. Diese Steuer-Bitfolge wird bitweise einem zweiten Eingang der Datenweiche DW2 zugeführt. Diese Datenweiche ist dabei von der Rahmen-Steuereinrichtung RST über einen Steuereingang derart gesteuert, daß die Steuer-Bitfolge sowie die digitalen Nachrichtensignale (Datensignale und digital codierte Sprachsignale) zeitgerecht entsprechend der vorgesehenen Rahmenstruktur an die Multiplex-Leitung ZL abgegeben werden. Die Rahmen-Steuereinrichtung RST erhält hierfür über eine Taktleitung TL im Bitraster Taktsignale zugeführt, aus welchen die Steuersignale abgeleitet werden.

Zuätzlich werden durch die Rahmen-Steuereinrichtung RST die Steuer-Bits der Steuer-Bitfolge, aus welchen die Belegung der einzelnen Subzeitkanäle hervorgeht, d.h. die Bits ST1 bis ST7 für jeden der Zeitkanäle bei dem ersten Ausführungsbeispiel (b) in FIG 2) bzw. die Bits ST0,2;...;ST7,2 bis ST0,31;...;ST7,31 bei dem zweiten Ausführungsbeispiel (c) in FIG 3), der zuvor erwähnten Steuerregister-Anordnung STReg1 übergeben. Hier werden diese Steuer-Bits zunächst in ein Laderegister LReg1 übernommen und von dort aus zu Beginn eines Überrahmens beispielsweise in paralleler Form in ein Schieberegister SReg1 übertragen. Das Laderegister erhält hierfür von der Rahmen-Steuereinrichtung RST entsprechende Steuersignale zugeführt.

Das Schieberegister SReg1 weist für jedes der von dem Laderegister LReg1 her zugeführten Steuer-Bits eine Registerzelle auf und ist als rückgekoppeltes Schieberegister ausgebildet, d.h. Datenausgang und Dateneingang sind miteinander verbunden. Unter der Steuerung der auf der zuvor erwähnten Takleitung TL im Bitraster auftretenden Taktsignale wird dabei das in diesem Schieberegister gespeicherte Bitmuster mit jedem Auftreten eines Taktsignals um eine Bitstelle verschoben, so daß am Ausgang dieses Schieberegisters nacheinander die den einzelnen Subzeitkanälen der Multiplex-Leitung ZL zugeordneten Steuer-Bits auftreten. Deren logische Pegel werden als Steuersignale der Datenweiche DW1 Zugeführt, so daß durch diese Steuersignale die den beiden Eingängen der Datenweiche DW1 zugeführten Datensignale und digital codierten Sprachsignale bei für diese freigegebener Datenweiche DW2 zeitgerecht, d.h. in dem jeweiligen Subzeitkanal, über die Multiplex-Leitung ZL zu der Gegenstelle hin übertragen werden.

In FIG 5 ist der Empfansteil der Leitungsanschlußeinrichtung E/Ak+1 dargestellt. Dieser erhält die über die Multiplex-Leitung ZL übertragenen Datensignale und digital codierten Sprachsignale sowie Steuersignale an einer Datenweiche DW3 zugeführt. Diese Datenweiche steht über einen ersten Ausgang mit dem Eingang einer weiteren Datenweiche DW4, über einen zweiten Ausgang dagegen mit einer Schieberegister-Anordnung STReg2 in Verbindung. Über zwei Ausgänge der Datenweiche DW4 werden die empfangenen Datensignale und digital codierten Sprachsignale nach Typ getrennt und bitweise an eine Datenleitung DL2 bzw. eine mit SPL bezeichnete Leitung für Sprachsignale weitergeleitet, welche über eine nicht dargestellte Einrichtung mit dem Vermittlungsbus VBUS (FIG 1) in Verbindung stehen. In die Datenleitung DL2 ist dabei ein HDLC-Baustein eingefügt, um den Datensignalstrom hinsichtlich einer fehlerfreien Übertragung zu überprüfen.

Die Steuerung der beiden Datenweichen DW3 und DW4 erfolgt mit Hilfe einer Rahmenerkennungs-Einrichtung RERK sowie der zuvor bereits erwähnten Schieberegister-Anordnung STReg2. Durch die Rahmenerkennungseinrichtung, welche mit der Multiplex-Leitung ZL verbunden ist, wird das Auftreten einer Steuer-Bitfolge entsprechend dem oben erläuterten ersten bzw. zweiten Steuerungsprinzip überwacht. Mit dem Beginn einer solche Steuer-Bitfolge wird dabei die Datenweiche DW3 derart gesteuert, daß die Steuer-Bits der Steuer-Bitfolge, aus welchen die Belegung der einzelnen Subzeitkanäle auf der Multiplex-Leitung ZL hervorgeht, d.h. die Bits ST1 bis ST7 für jeden der Zeitkanäle bei dem ersten Ausführungsbeispiel (b) in FIG 2) bzw. die Bits ST0,2;...;ST7,2 bis ST0,31;...;ST7,31 bei dem zweiten Ausführungsbeispiel (c) in FIG 3), der Steuerregister-Anordnung STReg2 zugeführt werden. Hier werden diese Steuer-Bits zunächst in ein Laderegister LReg2 übernommen und von dort aus zu Beginn eines Überrahmens beispielsweise in paralleler Form in ein Schieberegister SReg2 übertragen. Das Laderegister erhält hierfür von der Rahmenerkennungs-Einrichtung RERK entsprechende Steuersignale zugeführt, die aus der Rahmenerkennungs-Einrichtung über eine Taktleitung TL im Bitraster zugeführten Taktsignalen abgeleitet werden.

Das Schieberegister SReg2 weist für jedes der von dem Laderegister LReg2 her zugeführten Steuer-Bits eine Registerzelle auf und ist, wie das Schieberegister SReg1 des Sendeteils (FIG 4) als rückgekoppeltes Schieberegister ausgebildet, d.h. Datenausgang und Dateneingang sind miteinander verbunden. Unter der Steuerung der auf der zuvor erwähnten Takleitung TL im Bitraster auftretenden Taktsignale wird dabei das in diesem Schieberegister gespeicherte Bitmuster mit jedem Auftreten eines Taktsignals um eine Bitstelle verschoben, so daß am Ausgang dieses Schieberegisters nacheinander die den einzelnen Subzeitkanälen der Multiplex-Leitung ZL zugeordneten Steuer-Bits auftreten. Deren logische Pegel werden als Steuersignale der Datenweiche DW4 zugeführt, so daß durch diese Steuersignale die der Datenweiche DW4 zugeführten Datensignale und digital codierten Sprachsignale bei für diese freigegebener Datenweiche DW3 zeitgerecht dem Vermittlungsbus VBUS zugeführt werden.

## Patentansprüche

1. Verfahren zur Steuerung der Übertragen von digitalen Nachrichtensignalen eines ersten und/oder zweiten Typs in Zeitkanälen eines für einen Zeitmultiplex-Betrieb ausgelegten Übertragungsmediums, wobei den Zeitkanälen periodisch wiederholt in aufeinanderfolgenden Pulsrahmen auftretende Zeitschlitze zugeordnet sind,
**dadurch gekennzeichnet,**
daß der jeweilige Zeitkanal in eine festgelegte Mehrzahl von Subzeitkanälen unterteilt wird,
daß einer der Subzeitkanäle des jeweiligen Zeitkanals als Steuerkanal festgelegt wird,
daß in dem jeweiligen Steuerkanal zumindest ein Teil der zur Verfügung stehenden Übetragungskapazität für die Übertragung von Steuerdaten reserviert wird
und daß in den Steuerdaten den übrigen Subzeitkanälen des jeweiligen Zeitkanals individuell zugeordnete Angaben enthalten sind, durch welche der für den jeweiligen Subzeitkanal vorgesehene Typ von digitalen Nachrichtensignalen spezifiziert ist.

2. Verfahren nach Anspruch 1,
**dadurch gekennzeichnet,**
daß in dem dem jeweiligen Zeitkanal zugehörigen Steuerkanal fortlaufend Steuerdaten übertragen werden.

3. Verfahren nach Anspruch 1 oder 2,
**dadurch gekennzeichnet,**
daß in dem dem jeweiligen Zeitkanal zugehörigen Steuerkanal ein Teil der in diesem zur Verfügung stehenden Übertragungskapazität für die Übertragung der Steuerdaten, der verbleibenden Teil dagegen für die Übertragung von digitalen Nachrichtensignalen benutzt wird.

4. Verfahren nach Anspruch 1,
**dadurch gekennzeichnet,**
daß in dem jeweiligen Steuerkanal lediglich dann Steuerdaten übertragen werden, wenn sich zumindest für einen der Subzeitkanäle des jeweiligen Zeitkanals der Typ der digitalen Nachrichtensignale ändert,
und daß in der übrigen Zeit der Steuerkanal für die Übertragung von digitalen Nachrichtensignalen benutzt wird.

5. Verfahren zur Steuerung der Übertragung von digitalen Nachrichtensignalen eines ersten und/oder zweiten Typs in Zeitkanälen eines für einen Zeitmultiplex-Betrieb ausgelegten Übertragungsmediums, wobei den Zeitkanälen periodisch wiederholt in aufeinanderfolgenden Pulsrahmen auftretende Zeitschlitze zugeordnet sind,
**dadurch gekennzeichnet,**
daß der jeweilige Zeitkanal in eine festgelegte Mehrzahl von Subzeitkanälen unterteilt wird,
daß einer der Zeitkanäle für die übrigen Zeitkanäle als gemeinsamer Steuerkanal für die Übertragung von Steuerdaten festgelegt wird,
und daß in den Steuerdaten den übrigen Zeitkanälen individuell zugeordnete Angaben enthalten sind, durch welche der für jeden der Subzeitkanäle des jeweiligen Zeitkanals vorgesehene Typ von digitalen Nachrichtensignalen spezifiziert ist.

6. Verfahren nach Anspruch 5,
**dadurch gekennzeichnet,**
daß in dem gemeinsamen Steuerkanal fortlaufend Steuerdaten übertragen werden.

7. Verfahren nach Anspruch 5,
**dadurch gekennzeichnet,**
daß in dem gemeinsamen Steuerkanal lediglich dann Steuerdaten übertragen werden, wenn sich zumindest für einen der Subzeitkanäle eines Zeitkanals der Typ der digitalen Nachrichtensignale ändert,
und daß in der übrigen Zeit der gemeinsame Steuerkanal für die Übertragung von digitalen Nachrichtensignalen benutzt wird.

8. Verfahren nach einem der Ansprüche 1 bis 7,
**dadurch gekennzeichnet,**
daß als erster Typ von digitalen Nachrichtensignalen Datensignale, als zweiter Typ von digitalen Nachrichtensignalen dagegen digital codierte Sprachsignale übertragen werden.
